# EUROPÄISCHE PATENTSCHRIFT

(11) **EP 0 410 329 B1**
(45) Veröffentlichungstag und Bekanntmachung des Hinweises auf die Patenterteilung: **21.09.1994**
(21) Anmeldenummer: 90113996.4
(22) Anmeldetag: 21.07.1990
(51) Int. Cl.: H02G 7/20

(54) **Hochspannungsfreileitung**
High tension overhead line
Ligne aérienne à haute tension

(30) Priorität: 27.07.1989 DE 3924885
(43) Veröffentlichungstag der Anmeldung: 30.01.1991
(73) Patentinhaber: Asea Brown Boveri Aktiengesellschaft, 68309 Mannheim (DE)
(72) Erfinder: Schwab, Adolf, Prof. Dr., D-7500 Karlsruhe-Durlach (DE); Miri, Amir Mansour, Prof. Dr.-Ing., D-7500 Karlsruhe 21 (DE)
(74) Vertreter: Rupprecht, Klaus, Dipl.-Ing.

(56) Entgegenhaltungen:
- DE-A- 1 540 033
- DE-C- 2 424 214
- US-A- 3 399 269
- US-A- 3 482 031

## Beschreibung

Die Erfindung betrifft eine Hochspannungsfreileitung mit Leiterseilen, mit im Abstand zueinander angeordneten Tragmasten mit Tragarmen, die horizontal an den Tragmasten anschließen, sowie mit Tragkörpern, die zwischen den Tragarmen und den Leiterseilen angeordnet sind und zu deren Befestigung an den Tragarmen dienen, wobei die Leiterseile zwischen zwei Tragarmen ein Spannfeld bilden.

Freileitungen dienen zur Übertragung elektrischer Energie über große Entfernungen unter Benutzung der Umgebungsluft als Isolator zwischen den unterschiedliches Potential aufweisenden Leiterseilen. Die Leiterseile sind hierbei an Tragkörpern aus Isoliermaterial, vorzugsweise Porzellan, befestigt, die ihrerseits an die Tragarme der Tragmasten anschließen.

Die Länge der Tragkörper ist hierbei so bemessen, daß ein ausreichender Isolierabstand sowohl zwischen den einzelnen Leiterseilen unterschiedlichen Potentials als auch gegenüber den Tragarmen und dem Tragmasten sowie zum Erdboden gewährleistet ist.

Bei Hochspannungsfreileitungen hat sich die Verwendung von hängend angeordneten Tragkörpern durchgesetzt. Die Tragkörper, die im allgemeinen als Isolatorketten aus Porzellan ausgebildet sind, schließen hierbei gelenkig an die Tragarme an, um mittels der hierdurch gegebenen Beweglichkeit eine örtliche Überbeanspruchung der Leiterseile infolge mechanischer Kräfte zu verhindern.

Derartige Kräfte können bekanntlich (DE-Buch: Der Freileitungsbau, Rieger/Fischer, Springer-Verlag, Heidelberg 1975, Kapitel 4, Seite 136 bis 154) verschiedene Ursachen haben und sind bei der Konstruktion von Freileitungen entsprechend zu berücksichtigen. Neben den Kräften aus dem Eigengewicht der Leiterseile können Zusatzlasten durch Eisbelag sowie durch Wind, der die Leiterseile beaufschlagt, resultieren.

Weitere Zusatzlasten können aus Schwingungen resultieren, die unterschiedliche Ursache haben. Man unterscheidet im Freileitungsbau drei Arten von Schwingungen der Leiter, nämlich kurzzeitige Schwingungen, die durch einen Impuls hervorgerufen werden, mit großer Amplitude, Schwingungen mit kleiner Amplitude quer zur Leiterachse, mit kleiner Wellenlänge und hoher Frequenz, die auch als Vibration bezeichnet werden, und Längsschwingungen mit großer Wellenlänge großer Amplitude und kleiner Frequenz, die auch als Seiltanzen bezeichnet werden ("galoping of conductors") und sich nachteilig auf die Lebensdauer der Leiterseile auswirken.

Als maßgebliche Begleitumstände für das Auftreten von Längsschwingungen der Leiterseile wurden bislang verhältnismäßig ebenes Gelände, stärkerer Wind und oft unsymmetrischer Eisansatz bei Temperaturen um den Nullpunkt angesehen. Insbesondere der unsymmetrische Eisbelag der Leiterseile bei tiefen Temperaturen, der den Leiterseilen ein Tragflächenprofil verleiht, wurde als besonders relevant angesehen. Daneben wurde auch dem Seilaufbau ein Einfluß auf das Schwingverhalten, wie auch bereits bei den anderen Schwingungsformen, insbesondere der Vibration, zugemessen.

Neben den Einflußgrößen Windart (laminar, böig etc.), Landschaftstopologie, Temperatur (Tragflächenprofil des Eisbelags) und Seilaufbau, die gewöhnlich im Schrifttum genannt werden, kommt der Kopplung zwischen den Nachbarspannfeldern und damit der axialen Beweglichkeit der Seilaufhängepunkte die größte Bedeutung zu.

Neuere Beobachtungen haben ergeben, daß Seiltanzen auch bei Temperaturen über dem Gefrierpunkt auftritt, wobei dann die durch Eisbelag bedingte Tragflügeltheroie ausscheidet und nur noch die mechanische Koppelung zwischen den Spannfeldern für die Schwingungsentstehung ursächlich verantwortlich ist.

Eine Seilaufhängung für Hochspannungsleiterseile ist aus der US-A 3 482 031 bekannt. Bei der dort gezeigten Anordnung der Isolatoren, welche das Leiterseil halten, soll mit der vorgeschlagenen Schrägstellung der Isolatoren vermieden werden, daß Spannungsüberschläge an den Isolatoren auftreten, z. B. infolge von Feuchtigkeitsfilmen bei Regen oder Nebel. Um dennoch einen exakten Anschluß des Leiterseiles zu erreichen, sind je zwei Isolatoren für jeden Anschlußpunkt vorgesehen, die, zueinander schräg gestellt, einen gemeinsamen Anschlußpunkt am Leiterseil besitzen.

Ausgehend vom vorstehend genannten Stand der Technik ist es daher Aufgabe der Erfindung Maßnahmen vorzusehen, mit denen die Einleitung windbedingter Zusatzkräfte in benachbarte Spannfelder, mit anderen Worten die Spannfeldkoppelung weitestgehend verhindert wird.

Die Lösung der Aufgabe ist erfindungsgemäß dadurch gekennzeichnet, daß die Tragkörper jeweils biegesteif am zugeordneten Tragarm anschließen, wodurch ein laterales Auslenken des freien Endes verhindert ist.

Auf diese Weise ist sichergestellt, daß die Abspannpunkte des Leiterseils am jeweiligen Tragarm ortsfest sind. Aus Sicht einer mechanischen Rechnersimulation des Phänomens bedeutet diese Maßname eine Änderung der Randbedingungen des das Seiltanzen beschreibenden Differentialgleichungssystems, derart, daß Seiltanzen erst gar nicht entstehen kann.

Gemäß einer anderen Lösung kann erfindungsgemäß vorgesehen sein, daß die Tragkörper jeweils in Bezug auf die Längsachse der Leiterseite biegesteif mit dem zugeordneten Tragarm verbunden sind, wobei gemäß einer vorteilhaften Ausgestaltung ein Schwenkgelenk, z. B. Scharnier, vorgesehen sein kann, dessen Schwenkachse parallel zur Längsachse der Leiterseile angeordnet ist, so daß Ausschwenken zur Seite, d. h. quer zur Leiterseilsachse, möglich hingegen in Längsrichtung des Leiterseils unmöglich ist. Der Abspannpunkt für das Leiterseil bewegt sich hierbei in einer zur Leiterlängsachse senkrechten Ebene auf einem Kreisbogen entsprechend der Länge des Tragkörpers. Auch bei dieser Lösung ergeben sich Randbedingungen derart, daß das Seiltanzen gar nicht erst entstehen kann.

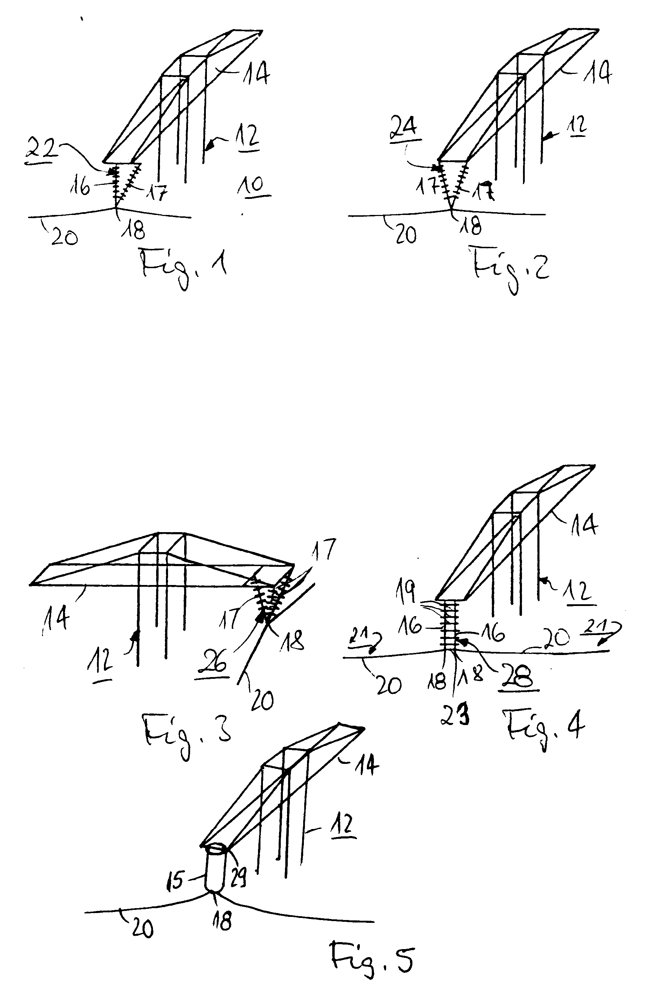

In zweckmäßiger Weiterbildung der Erfindung können zur Befestigung jeweils eines Leiterseiles am zugeordneten Tragarm jeweils zwei Tragkörper vorgesehen sein, deren Anschlußpunkte am Tragarm einen Abstand zueinander aufweisen. Es kann dabei vorteilhaft sein, daß die Tragkörper mit ihren freien Enden in einem gemeinsamen Punkt zusammengeführt sind und gemeinsam mit dem Tragarm ein Dreieck begrenzen, sei es ein rechtwinkliges Dreieck (Figur 1) oder ein gleichschenkliges Dreieck (Figur 2). Hierdurch ist sichergestellt, daß der gemeinsame Anschlußpunkt nur quer zur Leiterseilachse beweglich ist, nicht jedoch in Richtung der Leiterlängsachse.

Gemäß einer weiteren vorteilhaften Ausgestaltung der Erfindung sind zur Befestigung des zugeordneten Leiterseiles am jeweiligen Tragarm drei Tragkörper vorgesehen, deren Anschlußpunkte am Tragarm an den Endpunkten eines Dreiecks, vorzugsweise eines gleichseitigen Dreiecks, vorgesehen sind, und deren freie Enden pyramidenförmig in einem gemeinsamen Punkt zusammengeführt sind, der als Anschlußpunkt für das Leiterseil dient (Figur 3). Hiermit ist gewährleistet, daß der gemeinsame Anschlußpunkt für das Leiterseil ortsfest ist.

Es kann gemäß der Erfindung ferner vorgesehen sein, daß nur jeder zweite Tragmast der Freileitung mit den erfindungsgemäßen Tragkörpern an den Tragarmen versehen ist, wobei ggf. diese Anordnung für die einzelnen Leiterseile zueinander versetzt erfolgt. Hierdurch kann ohne Nachteil für die Verhinderung von Längsschwingungen der Aufwand an erfindungsgemäßen Tragkörpern vermindert werden.

Gemäß einer weiteren erfindungsgemäßen Lösung ist vorgesehen, daß die zwischen zwei benachbarten Tragmasten gespannten Leiterseile jeweils ein Spannfeld bilden, das vom benachbarten Spannfeld mechanisch entkoppelt ist, indem jedes Spannfeld zwei separate Abspannpunkte aufweist, die an eigens zugeordneten Tragkörpern vorgesehen sind.

Hierdurch ist die Übertragung von Längsschwingungen der Leiterseile eines Spannfeldes auf das sich anschließende Spannfeld verhindert.

Gemäß einer konkreten Ausgestaltung dieser Lehre sind für jedes Leiterseil an jedem Tragarm zwei parallele Tragkörper vorgesehen, die zumindest in Längsrichtung der Leiterseile biegesteif am Tragarm anschließen und deren freie Enden, die jeweils einen Abspannpunkt für das Leiterseil des zugehörigen Spannfeldes bilden, elektrisch leitend miteinander verbunden sind.

In vorteilhafter Weise können die parallelen Tragkörper hierbei mit sprossenähnlichen Querstreben verbunden sein, die so eine leiterartige Seilaufhängung bilden (Figur 4). Hierdurch wird eine ausreichende Steifheit des Abspannsystems, d. h. der Leiterseile der einzelenen Spannfelder, erreicht bei günstiger Montage. Der Anschluß der leiterartigen Seilaufhängung am Tragarm ist wie zuvor bereits erläutert, vorteilhafterweise mittels Schwenkgelenk vorgesehen, welches laterale Schwenkbewegungen des Leiterseils infolge Wind zuläßt, Längsschwingungen des Leiterseils hingegen verhindert.

Gemäß einer weiteren bevorzugten Ausgestaltung der Erfindung kann ein säulenförmiger Tragkörper vorgesehen sein, der entweder allseits biegesteif am Tragarm befestigt ist oder mittels eines Schwenkgelenks wie zuvor beschrieben am Tragarm ausgelenkt ist. Hiermit ist gewährleistet, daß der Anschlußpunkt für das Leiterseil ortsfest ist.

Aus der DE-A1-15 40 033 ist eine Aufhängevorrichtung für elektrische Freileitungen bekannt, welche zur Befestigung des Leiterseils paarweise angeordnete Isolatorketten vorsieht, um bei Isolatorbruch ein unzulässig großes Ausschwingen des Leiterseils zu verhindern. Gleichzeitig soll hierdurch der Abstand zu der auf Erdpotential liegenden Traverse sowie die Überschlagfestigkeit durch Erhöhung der Kriechstrecken vergrößert werden. Ein Hinweis auf das der Erfindung zugrundeliegende Problem bzw. dessen Lösung findet sich nicht.

Anhand von in den Figuren schematisch dargestellter Ausführungsbeispiele der Erfindung sollen vorteilhafte Ausgestaltungen und Verbesserungen der Erfindung sowie besondere Vorteile näher erläutert und beschrieben werden.

Es zeigen:
- Figur 1: eine dreieckförmige (rechtwinklig) Seilaufhängung
- Figur 2: eine dreieckförmige (gleichschenklig) Seilaufhängung,
- Figur 3: eine pyramidenförmige Seilaufhängung,
- Figur 4: eine leiterförmige Seilaufhängung,
- Figur 5: eine säulenförmige Seilaufhängung.

Figur 1 zeigt eine Hochspannungsleitung 10 mit dem oberen Abschnitt eines Tragmastes 12, aus welchem ein horizontaler Tragarm 14 auskragt. Am freien Ende des Tragarms 14 sind zwei als Tragkörper 16, 17 eingesetzte Isolatoren angeordnet, deren Anschlußpunkte am Tragarm im Abstand zueinander vorgesehen sind, während ihre freien Enden in einem gemeinsamen Punkt zusammengeführt sind, der als Abspannpunkt 18 für zugehöriges Leiterseil 20 dient. Auf diese Weise ist eine Seilaufhängung 22 in Form eines rechtwinkligen Dreiecks gebildet.

In Figur 2 ist eine ähnliche Anordnung wie in Figur 1 gezeigt, ebenfalls mit dem oberen Abschnitt eines Tragmastes 12 mit einem daran anschließenden Tragarm 14 an dessen freiem Ende zwei Tragkörper 17 im Abstand zueinander angeordnet sind. Die freien Enden der Tragkörper 17 sind ebenfalls in einem gemeinsamen Punkt zusammengeführt der ebenfalls als Abspannpunkt 18 für das Leiterseil 20 dient. Im Unterschied zu Figur 1 sind jedoch beide Tragkörper 17 im gleichen Winkel zum Tragarm 19 geneigt und bilden so eine gleichschenklige Seilaufhängung 24.

Figur 3 zeigt ebenfalls den oberen Abschnitt eines Tragmastes 12 mit einem Tragarm 14, an dessen freiem Ende drei Tragkörper 17 an den Eckpunkten eines Dreiecks angeordnet sind. Die Tragkörper 17 sind ebenfalls unter gleichem Winkel zum Tragarm 14 geneigt und mit ihren freien Enden in einem gemeinsamen Punkt vereinigt, der als Abspannpunkt 18 für das Leiterseil 20 dient. Hierdurch ist eine pyramidenförmige Seilaufhängung 26 gebildet.

In Figur 4 ist ein Tragmast 12 gezeigt, an dessen oberem Abschnitt ein Tragarm 14 anschließt, an dessen freiem Ende zwei Tragkörper 16 im Abstand zueinander angeordnet sind. Die Anschlußpunkte der Tragkörper 16 am Tragarm 14 liegen auf einer zur Längsrichtung des Leiterseils 20 parallelen Gerade. Ebenso sind die Tragkörper 16 parallel zueinander angeordnet und zusätzlich mit sprossenähnlichen Querstreben 19 versehen. Am freien Ende der solcher Art gebildeten leiterartigen Seilaufhängung 28 sind zwei nebeneinanderliegende Abspannpunkte 18, von denen jeder dem zugewandten Spannfeld des Leiterseils 20 zugeordnet ist. Ein Leiterstück 23 dient zur elektrischen Verbindung der beiden Abspannpunkte 18.

In Figur 5 ist ein säulenförmiger Tragkörper 15 gezeigt, der so am Tragarm 14 angeordnet ist, daß er sich zumindest in Seillängsrichtung biegesteif verhält. Zu diesem Zweck ist er mittel eines Gelenks 29, dessen Schwenkachse parallel zur Seillängsrichtung verläuft, am Tragarm 14 befestigt.

## Patentansprüche

1. Hochspannungsfreileitung (10) mit Tragmasten (12) und mit daran anschließenden Tragarmen (14), mit an den Tragarmen (14) angeordneten Isolatoren als Tragkörper (16, 17) für daran befestigte Leiterseile (20) dadurch gekennzeichnet, daß die Tragkörper (16, 17) jeweils biegesteif am zugeordneten Tragarm (14) anschließen und so eine starre Seilaufhängung (22, 24, 26, 28) bilden.

2. Hochspannungsfreileitung (10) mit Tragmasten (12) und mit daran anschließenden Tragarmen (14), mit an den Tragarmen (14) angeordneten Isolatoren als Tragkörper (16, 17) für daran befestigte Leiterseile (20), dadurch gekennzeichnet, daß die Tragkörper (16, 17) jeweils in Bezug auf die Längsachse der Leiterseile (29) biegesteif mit dem zugeordneten Tragarm (14) verbunden sind, wobei Schwenkgelenke zur Befestigung der Tragkörper (16, 17) am Tragarm (14) mit zum Leiterseil (20) paralleler Schwenkachse vorgesehen sind.

3. Hochspannungsfreileitung nach Anspruch 1 oder 2, dadurch gekennzeichnet, daß zur Befestigung eines Leiterseiles (20) wenigstens ein Tragkörper (15, 16, 17) an dem zugeordneten Tragarm (14) jedes Tragmastes (12) vorgesehen ist.

4. Hochspannungsfreileitung nach Anspruch 1 oder 2, dadurch gekennzeichnet, daß zur Befestigung eines Leiterseiles (20) wenigstens ein Tragkörper (15, 16, 17) an den zugeordneten Tragarmen (14) jedes zweiten Tragmastes (12) vorgesehen sind.

5. Hochspannungsfreileitung nach einem der Ansprüche 3 oder 4, dadurch gekennzeichnet, daß die Anschlußpunkte der Tragkörper (15, 16, 17) am jeweiligen Tragarm (14) im Abstand zueinander angeordnet sind.

6. Hochspannungsfreileitung nach Anspruch 5, dadurch gekennzeichnet, daß die freien Enden der Tragkörper (16, 17) zusammengeführt sind und gemeinsam als Befestigungspunkt (18) für das zugeordnete Leiterseil (20) dienen.

7. Hochspannungsfreileitung nach Anspruch 5, dadurch gekennzeichnet, daß drei Tragkörper (17) vorgesehen sind, deren Anschlußpunkte am zugeordneten Tragarm (14) ein Dreieck bilden, und daß die freien Enden der Tragkörper (17) zusammengeführt sind und den gemeinsamen Anschlußpunkt (18) für das zugeordnete Leiterseil (20) bilden.

8. Hochspannungsfreileitung (10) mit Tragmasten (12) mit Tragarmen (14), mit an den Tragarmen (14) angeordneten Isolatoren als Tragkörper (15, 16) für daran befestigte Leiterseile (20), wobei zwischen zwei benachbarten Tragmasten (12) gespannte Leiterseile (20) jeweils ein Spannfeld (21) bilden, dadurch gekennzeichnet, daß aneinander anschließende Spannfelder (21) mechanisch voneinander entkoppelt sind, indem jedes Spannfeld (21) separate Anschlußpunkte (18) aufweist, die an eigens zugeordneten Tragkörpern (16) vorgesehen sind.

9. Hochspannungsfreileitung nach einem der Ansprüche 5 oder 8, dadurch gekennzeichnet, daß die Tragkörper (16) parallel zueinander angeordnet sind und zumindest in Längsrichtung der Leiterseile (20) biegesteif am Tragarm (14) anschließen und daß die freien Enden der Tragkörper (16), die jeweils einen Abspannpunkt (18) für das Leiterseil (20) des zugehörigen Spannfeldes (21) bilden, elektrisch leitend miteinander verbunden sind.

10. Hochspannungsfreileitung nach Anspruch 9, dadurch gekennzeichnet, daß die beiden Tragkörper (16) mittels sprossenähnlicher Querstreben (19) verbunden sind und eine leiterartige Seilaufhängung (28) bilden.

11. Hochspannungsfreileitung nach Anspruch 3 oder 8, dadurch gekennzeichnet, daß ein säulenförmiger Tragkörper (15) vorgesehen ist, der über ein Schwenkgelenk (29) mit zur Seillängsrichtung paralleler Schwenkachse am Tragarm (14) anschließt.

## Claims

1. High-voltage overhead line (10) with suspension towers (12) and with adjoining supporting arms (14) with insulators, arranged on the supporting arms (14), as supporting elements (16, 17) for overhead conductors (20) attached thereto, characterized in that the supporting elements (16, 17) are each connected to the associated supporting arm (14) in a flexurally rigid fashion and thus form a rigid conductor suspension (22, 24, 26, 28).

2. High-voltage overhead line (10) with suspension towers (12) and with adjoining supporting arms (14) with insulators, arranged on the supporting arms (14), as supporting elements (16, 17) for overhead conductors (20) attached thereto, characterized in that the supporting elements (16, 17) are each connected in a flexurally rigid manner to the associated supporting arm (14) in each case with respect to the longitudinal axis of the overhead conductors (29), pivot joints being provided for the attachment of the supporting elements (16, 17) to the supporting arm (14) with a pivot axis which is parallel to the overhead conductor (20).

3. High-voltage overhead line according to Claim 1 or 2, characterized in that at least one supporting element (15, 16, 17) is provided on the associated supporting arm (14) of each suspension tower (12) for the attachment of an overhead conductor (20).

4. High-voltage overhead line according to Claim 1 or 2, characterized in that at least one supporting element (15, 16, 17) is provided on the associated supporting arms (14) of every second suspension tower (12) for the attachment of an overhead conductor (20).

5. High-voltage overhead line according to one of Claims 3 or 4, characterized in that the connection points of the supporting element (15, 16, 17) on the respective supporting arm (14) are arranged at a distance from one another.

6. High-voltage overhead line according to Claim 5, characterized in that the free ends of the supporting elements (16, 17) are joined and serve together as an attachment point (18) for the associated overhead conductor (20).

7. High-voltage overhead line according to Claim 5, characterized in that three supporting elements (17) are provided whose connection points to the associated supporting arm (14) form a triangle and in that the free ends of the supporting elements (17) are joined and form the common connection point (18) for the associated overhead conductor (20).

8. High-voltage overhead line (10) with suspension towers (12) with supporting arms (14), with insulators, arranged on the supporting arms (14), as supporting elements (15, 16) for overhead conductors (20) attached thereto, overhead conductors (20) which are stretched between two adjacent suspension towers (12) each forming one span (21), characterized in that adjoining spans (21) are mechanically isolated from one another in that each span (21) has separate connection points (18) which are provided on specially assigned supporting elements (16).

9. High-voltage overhead line according to one of Claims 5 or 8, characterized in that the supporting elements (16) are arranged parallel to one another and adjoin the supporting arm (14) in a flexurally rigid fashion at least in the longitudinal direction of the overhead conductors (20), and in that the free ends of the supporting elements (16), which each form an anchoring point (18) for the overhead conductor (20) of the associated span (21), are connected to one another in an electrically conductive manner.

10. High-voltage overhead line according to Claim 9, characterized in that the two supporting elements (16) are connected to one another by means of crossbar-like transverse struts (19) and form a ladder-like conductor suspension (28).

11. High-voltage overhead line according to Claim 3 or 8, characterized in that a column-like supporting element (15) is provided which adjoins the supporting arm (14) via a pivot joint (29) with a pivot axis which is parallel to the longitudinal direction of the conductor.

## Revendications

1. Ligne aérienne à haute tension (10) comprenant des poteaux de support (12), des bras de support (14) s'y raccordant et des isolateurs disposés sur les bras de support (14) en tant que corps de support (16, 17) pour des câbles conducteurs (20) qui y sont fixés, caractérisée par le fait que les corps de support (16, 17) se raccordent de façon rigide en flexion au bras de support (14) associé et forment ainsi une suspension de câble rigide (22, 24, 26, 28).

2. Ligne aérienne à haute tension (10) comprenant des poteaux de support (12), des bras de support (14) s'y raccordant et des isolateurs disposés sur les bras de support (14) en tant qu'éléments de support (16, 17) pour des câbles conducteurs (20) qui y sont fixés, caractérisée par le fait que les corps de support (16, 17) sont reliés de façon rigide en flexion par rapport à l'axe longitudinal des câbles conducteurs (19) au bras de support associé (14), des articulations de pivotement étant prévues pour la fixation des corps de support (16, 17) au bras de support (14) avec un axe de pivotement parallèle au câble conducteur (20).

3. Ligne aérienne à haute tension suivant la revendication 1 ou 2, caractérisée par le fait qu'au moins un corps de support (15, 16, 17) est prévu sur le bras de support associé (14) de chaque poteau de support (12) en vue de la fixation d'un câble conducteur (20).

4. Ligne aérienne à haute tension suivant la revendication 1 ou 2, caractérisée par le fait qu'au moins un corps de support (15, 16, 17) est prévu sur les bras de support associés (14) de chaque deuxième poteau de support (12) en vue de la fixation d'un câble conducteur (20).

5. Ligne aérienne à haute tension suivant l'une des revendications 3 ou 4, caractérisée par le fait que les points de raccordement des corps de support (15, 16, 17) au bras de support (14) sont disposés à distance réciproque.

6. Ligne aérienne à haute tension suivant la revendication 5, caractérisée par le fait que les extrémités libres des corps de support (16, 17) sont réunies et servent ensemble de point de fixation (18) pour le câble conducteur associé (20).

7. Ligne aérienne à haute tension suivant la revendication 5, caractérisée par le fait que trois corps de support (17) sont prévus, dont les points de raccordement au bras de support associé (14) forment un triangle, et que les extrémités libres des corps de support (17) sont réunies et forment le point de raccordement commun (18) pour le câble conducteur associé (20).

8. Ligne aérienne à haute tension (10)comprenant des poteaux de support (12) avec des bras de support (14) et des isolateurs disposés sur les bras de support (14) en tant que corps de support (15, 16) pour des câbles conducteurs (20) qui y sont fixés, les câbles conducteurs (20) tendus entre deux poteaux de support voisins (12) formant chaque fois une portée (21), caractérisée par le fait que les portées (21) successives sont mécaniquement découplées les unes des autres par le fait que chaque portée (21) présente des points de raccordement (18) séparés qui sont prévus sur des corps de support (16) associés.

9. Ligne aérienne à haute tension suivant l'une des revendications 5 ou 8, caractérisée par le fait que les corps de support (16), sont disposés parallèlement les uns aux autres et se raccordent au bras de support (14) de façon rigide en flexion au moins dans la direction longitudinale des câbles conducteurs (20) et par le fait que les extrémités libres des corps de support (16) qui forment chaque fois un point de fixation pour le câble conducteur (20) de la portée correspondante (21) sont reliées de façon électriquement conductrice entre elles.

10. Ligne aérienne à haute tension suivant la revendication 9, caractérisée par le fait que les deux corps de support (16) sont reliés à l'aide d'entretoises transversales (19) semblables à des barreaux et forment une suspension de câble (28) en forme d'échelle.

11. Ligne aérienne à haute tension suivant la revendication 3 ou 8, caractérisée par le fait qu'il est prévu un corps de support (15) en forme de colonne qui se raccorde au bras de support (14) par une articulation de pivotement (29) ayant un axe de pivotement parallèle à la direction longitudinale du câble.
